# EUROPÄISCHE PATENTSCHRIFT

(11) **EP 3 581 328 B1**
(45) Veröffentlichungstag und Bekanntmachung des Hinweises auf die Patenterteilung: **15.04.2020**
(21) Anmeldenummer: 18178007.3
(22) Anmeldetag: 15.06.2018
(51) Int. Cl.: B23Q 17/00

(54) **WERKZEUGMASCHINENEINHEIT MIT PLANLAUFFEHLER-KONTROLLE UND PRÜFUNGSVERFAHREN FÜR DEN SPANNZUSTAND**
MACHINE-TOOL UNIT WITH RUNOUT ERROR CONTROL AND TESTING METHOD OF THE TENSIONING STATE
UNITÉ DE MACHINE-OUTIL À CONTRÔLE DU VOILE ET PROCÉDÉ DE VÉRIFICATION DE L'ÉTAT DE SERRAGE

(43) Veröffentlichungstag der Anmeldung: 18.12.2019
(73) Patentinhaber: Franz Kessler GmbH, 88422 Bad Buchau (DE)
(72) Erfinder: VAN SPRANG, Joachim, 88213 Ravensburg (DE); WEING, Harald, 88400 Biberach (DE)
(74) Vertreter: Otten, Roth, Dobler & Partner mbB Patentanwälte

(56) Entgegenhaltungen:
- EP-A1- 1 593 456
- EP-B1- 1 889 685
- DE-A1- 10 144 643
- DE-A1-102006 016 919

## Beschreibung

Die Erfindung betrifft eine motorisch angetriebene Werkzeugmaschineneinheit nach dem Oberbegriff des Anspruchs 1 sowie ein Verfahren zur Prüfung des Spannzustands nach dem Oberbegriff des Anspruchs 7.

Aus dem Stand der Technik ist beispielsweise aus der EP 1 889 685 B1 eine Werkzeugmaschine bekannt, bei der mittels einer Messuhr die Oberflächenkontur der Umfangsfläche des Spindelkopfes dahingehend untersucht wird, ob eine Deformation vorliegt. Eine derartige Deformation wird sodann darauf zurückgeführt, dass im Bereich zwischen Werkzeug-Außenfläche und der Innenfläche der Werkzeugaufnahme ein Span eingeklemmt wurde.

Ferner ist aus der DE 101 44 643 A1 eine Vorrichtung zur Ermittlung von Betriebszuständen eines Rotor-Stator-Systems bekannt, mit der z.B. Verlagerungen des Rotors, bedingt durch Fliehkräfte oder Bearbeitungskräfte im Betrieb, über mehrere Abstandssensoren gemessen werden können.

Aufgabe der Erfindung ist es, eine motorisch angetriebene Werkzeugmaschineneinheit bzw. ein Prüfungsverfahren für den Spannzustand vorzuschlagen, mit der die Präzision der Bearbeitung durch die entsprechende Werkzeugmaschine verbessert werden kann.

Die Aufgabe wird, ausgehend von einer motorisch angetriebenen Werkzeugmaschineneinheit bzw. einem Prüfungsverfahren der eingangs genannten Art, durch die kennzeichnenden Merkmale des Anspruchs 1 bzw. des Anspruchs 7 gelöst.

Durch die in den abhängigen Ansprüchen genannten Maßnahmen sind vorteilhafte Ausführungen und Weiterbildungen der Erfindung möglich.

Die erfindungsgemäße motorisch angetriebene Werkzeugmaschineneinheit umfasst eine Statoreinheit und eine Rotoreinheit, wobei die Rotoreinheit um eine Drehachse drehbar gelagert ist. Die sich gegenüber der Statoreinheit drehende Rotoreinheit gehört in der Regel zu einem Motorspindel-Antrieb. Zur Aufnahme eines Werkzeugs ist eine Werkzeugaufnahmeeinheit vorgesehen, welche wiederum Teil des Spindelkopfes der Rotoreinheit ist. Das in der Werkzeugaufnahmeeinheit aufzunehmende Werkzeug wird dabei zur Halterung mit einer Werkzeug-Spannvorrichtung verspannt. Zum Verspannen wiederum wird diese Werkzeug-Spannvorrichtung mit einer Spannkraft beaufschlagt und in Längsrichtung der Drehachse verstellt. Ein Teil der Spannvorrichtung kann dabei zum Beispiel in eine sich verjüngende Aufnahme gezogen werden, sodass das Werkzeug wiederum mit einer radial wirkenden Kraft geklemmt werden kann. Durch Lösen der Spannkraft kann auch wiederum das verspannte Werkzeug gelöst werden.

Erfindungsgemäß ist eine Prüfungsvorrichtung zur Prüfung des Spannzustandes des Werkzeugs vorgesehen, welche genau einen Sensorkopf zur sensorischen Erfassung aufweist, wodurch grundsätzlich bereits Kosten eingespart werden können, da oftmals bei herkömmlichen Werkzeugmaschinen aus dem Stand der Technik mehrere Sensoren verwendet werden. Der Sensorkopf umfasst die eigentliche Baueinheit bzw. den eigentlichen Sensor, der schließlich die sensorische Erfassung durchführt. Die gesamte Prüfungsvorrichtung kann zum Beispiel eine Auswerteelektronik und/oder eine Elektronikeinheit zur Verarbeitung der Sensordaten umfassen.

Dementsprechend zeichnet sich die erfindungsgemäße Werkzeugmaschineneinheit dadurch aus, dass der Sensorkopf an der Statoreinheit an einer festen Position so angeordnet ist, dass er den Abstand zu einem stirnseitigen Teil des relativ zum Sensorkopf rotierenden Spindelkopfs misst. Der Sensorkopf ist somit gegenüber der Rotoreinheit stehend angeordnet, d.h. es handelt sich nicht um einen mit der Rotoreinheit mitrotierenden Sensor, sondern der Sensorkopf kann der Statoreinheit zugeordnet werden. In vorteilhafter Weise misst der Sensorkopf einen Abstand, der im Wesentlichen parallel zur Drehachse verläuft, also zu einem stirnseitigen Teil des Spindelkopfes. Die erfindungsgemäße Werkzeugmaschineneinheit macht sich dabei zunutze, dass sich eine Deformation durch einen Span nicht ohne Weiteres allein auf die umfangseitige Oberfläche auswirkt, sondern es sind auch Änderungen im Bereich der Stirnseite der Rotoreinheit bzw. des Spindelkopfes zu verzeichnen. Der Spindelkopf wird im Allgemeinen beim Auftreten von Planlauffehlern auch an der Stirnseite deformiert und/oder aber durch den Planlauffehler in Bezug auf seine Ausrichtung zur Drehachse verschoben, sodass auch in diesem Fall stirnseitig eine Verschiebung der Rotoreinheit festgestellt werden kann.

Durch die Anordnung des Sensorkopfes, die eine Stirnseite Abstandsmessung ermöglicht, kann also in vorteilhafter Weise ein wesentlich breiteres Spektrum an Fehlern aufgenommen werden. Darüber hinaus bietet eine derartige Anordnung den Vorteil, dass eine schlankere und platzsparendere Bauweise der Werkzeugmaschineneinheit möglich ist.

Ferner umfasst analog ein erfindungsgemäßes Verfahren zur Prüfung des Spannzustands eines in einer Werkzeugaufnahmeeinheit einer Rotoreinheit einer motorisch angetriebenen Werkzeugmaschineneinheit eingespannten Werkzeugs folgende Verfahrensschritte:
- Bereitstellen eines Sensorkopfes zur Bestimmung eines Abstandes
- Anordnung des Sensorkopfes an einer festen Position an der Statoreinheit
- Messung des Abstands des Sensorkopfes von einem stirnseitigen Teil der Rotoreinheit
- Aufnahme einer zeitlichen und/oder positionsbezogenen Abfolge der mit dem Sensorkopf gemessenen Abstandswerte
- Bestimmung einen Planlauffehlers ausschließlich unter Berücksichtigung der zeitlichen Abfolge der gemessenen Abstandswerte zum stirnseitigen Teil des relativ zum Sensorkopf rotierenden Spindelkopfes.

Es wird insbesondere genau ein Sensorkopf verwendet, um die Abstandswerte aufzunehmen. Der Sensorkopf, der Teil der Statoreinheit ist, nimmt zeitlich aufeinanderfolgende Abstandswerte an einem festen Ort gegenüber der sich drehenden Rotoreinheit auf. Somit können auch in vorteilhafter Weise positionsbezogene Abstandswerte gewonnen werden, da die Winkelgeschwindigkeit der Rotoreinheit in der Werkzeugmaschine regelmäßig bekannt ist.

Der Sensor kann den Abstand zu einer senkrecht zu ihm stehenden oder auch eine geneigten Fläche der Rotoreinheit, evtl. eines Messrings, bestimmen. Die Messfläche befindet sich im Allgemeinen vorteilhafterweise im Bereich der Werkzeugschnittstelle der Spindel, da typischerweise nicht beim Spannen auftretende Fehler hier deutlich hervortreten, sondern auch Verlagerungen der Rotoreinheit bzw. der Drehachse.

Um eine verbesserte Fehleranalyse zu ermöglichen, ist die Prüfungsvorrichtung dazu ausgebildet, eine zeitliche und/oder positionsbezogene Abfolge von wenigstens zwei Abstandswerten bzw. wenigstens zwei aufeinanderfolgenden Serien von jeweils wenigstens zwei Abstandswerten aufzunehmen. Somit kann zum Beispiel allein aus der zeitlichen bzw. positionsbezogenen Abfolge von Abstandswerten ein Planlauffehler bestimmt werden. Durch diese Maßnahme kann ein Spannzustand besonders gut erfasst werden, da typische Fehler, wie zum Beispiel das Auftreten eines Spans im Bereich der Spannvorrichtung mit Planlauffehler verbunden sind, die sich dadurch bemerkbar machen, dass der stirnseitigen Abstand des rotierenden Spindelkopfes zum stehenden Sensorkopf nicht konstant bleibt, sondern sich im zeitlichen bzw. positionsbezogenen Ablauf ändert.

In besonders vorteilhafter Weise können zwei Serien von Messwerten aufgenommen werden, um einen Vergleich zwischen beiden Serien herbeiführen zu können, beispielsweise den Vergleich im Falle eines eingespannten Werkzeugs bei einer neuen oder gereinigten Werkzeugmaschineneinheit (als erste Serie) gegenüber einer Werkzeugmaschineneinheit im regulären Betrieb, bei der auch grundsätzlich mit Verschmutzungen zu rechnen ist (als weitere Serie). Mit der ersten Serie wird somit ein idealer Spannzustand bzw. ein als Referenz dienender Spannzustand aufgenommen und als solcher definiert. Die Referenzwerte können als Sollwerte verwendet werden.

Um den Spannzustand umfassend und genau zu prüfen, kann bei einer Ausführungsform des Prüfungsverfahrens eine Serie von Abstandswerten für jedes verwendete Werkzeug als Referenz aufgenommen werden. Insbesondere wird somit berücksichtigt, dass sich die Werkzeuge in der Regel geometrisch voneinander unterscheiden, sodass ein präziser Vergleich der Messwerte möglich ist. Jedes Werkzeug ist selbst individuellen Fertigungstoleranzen unterlegen, sodass auch Werkzeuge der gleichen Größe und des gleichen Typs geometrisch in der Regel nicht übereinstimmen, sondern Geometriefehler besitzen. Der aktuelle Spannzustand kann diese Maßnahme also sehr genau erfasst werden.

Zudem können Planlauffehler durch die Erfindung wesentlich zuverlässiger bestimmt werden, als dies bislang nach dem Stand der Technik möglich ist.

Da in vorteilhafter Weise ein Vergleich des Verlaufs der Messwerte über die Spindelumdrehung erfindungsgemäß vorgenommen wird, können auch thermische Verformungen an der Spindel, bei denen es sich in der Regel um langsam stattfindende Prozesse handelt, aus der Auswertung herausgehalten.

Grundsätzlich können Referenzmessungen jederzeit durchgeführt werden. Es kann sich auch anbieten, in regelmäßigen Abständen Messungen durchzuführen und gegebenenfalls aktuellere Datensätze als Referenzmessungen zu verwenden. Eine Referenzmessung im Neuzustand bzw. im gereinigten Zustand hilft, vorzubeugen, dass z.B. kein Span in die Werkzeugaufnahme bzw. das Futter gelangt und die Messung verfälscht. Eine Neuaufnahme von Referenzmessungen kann aber dazu verwendet werden, zu überprüfen, ob durch regelmäßigen Betrieb, Abnutzungen oder dergleichen die Abstandswerte sich generell verändern.

Entgegen einem technischen Vorurteil ist es nicht notwendig, zwei Sensoren zu verwenden, die einen Spannzustand zum Beispiel an verschiedenen Winkelpositionen in einer Ebene senkrecht zur Drehachse vermessen, um Auslenkungen an verschiedenen Winkelpositionen zu bestimmen und die Daten für die Auswertung verwenden zu können. Vielmehr genügt eine Messung an einer einzigen Winkelposition, wobei in vorteilhafter Weise der Vergleich zu einem Sollwert berücksichtigt wird.

Die Rotoreinheit kann eigens für die Messung ein Zusatzelement aufweisen, bezüglich dem die Messung durchgeführt wird bzw. zu dem der Sensorkopf den Abstand misst. Je nach Art des Sensorkopfes kann somit der Messring die für die Messung vorteilhaften Eigenschaften aufweisen, z.B. aus einem entsprechenden Material gefertigt sein oder Messmarkierungen aufweisen. Durch die Größe des Messrings kann auch, ähnlich wie bei einem Hebel, die Wirkung verstärkt werden, d.h. eine geringe Deformation wirkt sich über eine größere Strecke stärker aus, sodass die Prüfungsvorrichtung eine höhere Messempfindlichkeit und Messgenauigkeit erreichen kann. Im Falle von induktiven Sensoren, insbesondere Wirbelstromsensoren kann es vorteilhaft sein, wenn das für den Messring verwendet Material zwar elektrisch leitend ist, zudem aber keine ferromagnetischen Eigenschaften aufweist, sondern nur die Induktion einer Spannung berücksichtigt werden muss. Der Messring kann zum Beispiel aus Aluminium gefertigt sein, das leicht ist und an der Oberfläche eine passivierende Oxidschicht bildet, also auch korrosionsbeständig ist.

Bei einem Ausführungsbeispiel der Erfindung kann der Messring beispielsweise auf den Spindelkopf aufgesetzt sein. Denkbar ist auch, dass Spindelkopf und Messring einteilig ausgebildet sind, d.h. miteinander fest verbunden oder aus einem Material gefertigt sind. Die zuletzt genannte Ausführungsform bietet sich aus Fertigungsgründen zum Beispiel an, wenn Spindelkopf und Messring aus dem gleichen Material gefertigt sein können. Ferner bietet ein Messring den Vorteil, dass auch Referenzmarkierungen nahezu beliebig angebracht werden können, ohne dass die Funktionalität der Rotoreinheit beeinträchtigt wird, wodurch die Qualität der Messung verbessert werden kann.

Wird eine Abfolge von Messwerten aufgenommen und z.B. mit einer weiteren Abfolge von Messwerten verglichen, so ist vorteilhafter weise die Phasenbeziehung zwischen beiden Abfolgen bzw. Serien von Messwerten bekannt. Zumindest sollte die Zuordnung der zu vergleichenden Messwerte so erfolgen, dass eine konstante Phasenbeziehung vorliegt, damit die Auswertung aussagekräftige Ergebnisse liefern kann. In der Regel ist es vorteilhaft, wenn zwischen zwei in der jeweiligen Abfolge aufeinanderfolgenden Messwerten jeweils stets eine konstante Zeitspanne zwischen den Messungen lag und/oder sich die Rotoreinheit um den gleichen Winkel gedreht hat, sodass anhand der Messung die Winkelunterschiede zwischen den Positionen, an denen gemessen wurde, nachvollzogen werden können. In vorteilhafter Weise kann bei einer Weiterbildung der Erfindung bei der Aufnahme der Abfolge von Abstandswerten ein Initialpunkt gesetzt werden. Zu diesem Zweck weist der Messring in vorteilhafter Weise eine Referenzmarkierung auf, etwa in Form einer Nut, einer Bohrung, einer sonstigen Ausnehmung oder einer Erhebung. Denkbar ist grundsätzlich auch eine optische Markierung.

Die Abstandswerte werden erfindungsgemäß nur von einem Sensorkopf aufgenommen. Die Referenzmarkierung kann, etwa im Falle einer Ausnehmung oder Erhebung, den Abstand so verändern, dass die Prüfungsvorrichtung dies als Initialpunkt erkennt. Es ist aber auch denkbar, die Erfassung des Initialpunkts allein auf andere sensorische Weise durchzuführen, etwa durch eine optische Markierung. Diese kann von einem separaten Triggersensor erfasst werden, der sonst aber keinen Abstandswert für die Auswertung liefert, d.h. keinen zusätzlichen Sensorkopf im Sinne der Erfindung zur Abstandmessung darstellt.

Eine optische Markierung kann den Vorteil bieten, dass sie an einem schnell rotierenden Bauteil mit geringerer Unwucht verbunden sein kann. Zudem kann noch deutlicher zwischen einer Abweichung durch einen Planlauffehler und dem Initialpunkt unterschieden werden, wenn die Referenzmarkierung nicht auch als Deformation interpretiert werden kann, wie dies bei einer Nut oder einer Erhebung der Fall ist.

Es sind grundsätzlich verschiedene Sensorarten denkbar, die für den Sensorkopf infrage kommen und mit denen der Abstand zur Rotoreinheit bzw. zum Messring bestimmt werden kann. In vorteilhafter Weise können berührungslose Abstandssensoren verwendet werden, da der Sensorkopf an der Statoreinheit eingebaut ist und der Abstand zu einem Teil der Rotoreinheit bestimmt werden soll. Bei einer besonders bevorzugten Weiterbildung der Erfindung wird ein Wirbelstromsensor verwendet, der insbesondere in der Regel unempfindlich gegenüber Öl, Wasser oder nichtmetallischem Staub ist, womit im Betrieb der Werkzeugmaschine durchaus gerechnet werden muss. Ein Wirbelstromsensor kann als induktiver Sensor angesehen werden. Es sind aber auch Ausführungsbeispiele mit kapazitiven oder optischen Sensoren denkbar.

In vorteilhafter Weise kann bei einer Weiterbildung der Erfindung, bei der ein Wirbelstromsensor verwendet wird, der Messring aus einem nicht ferromagnetischen Material, z.B. einem paramagnetischen Material gefertigt sein, wodurch auch die Messgenauigkeit gesteigert werden kann, da ein ferromagnetisches Material stets unter dem Einfluss der in der Werkzeugmaschine vorherrschenden Magnetfelder steht. Ein ferromagnetisches Material wird daher, wenn es einem Magnetfeld ausgesetzt war, etwa eine gewisse Remanenz behalten, auch wenn kein äußeres Feld mehr vorliegt. Wenn eine Magnetisierung des Messrings bzw. des Teils der Rotoreinheit, zu welcher der Abstand bestimmt wird, die Messung beeinflussen kann, sollte eine ferromagnetisches Material vermieden und z.B. ein Wirbelstromsensor gewählt werden.

Neben Deformationen können z.B. auch Verlagerungen der Rotoreinheit bzw. der Drehachse bestimmt werden. Die Abfolge der Messwerte kann Auskunft darüber geben, welcher Fall gerade vorliegt. Bei einer Deformation ist z.B. mit einer periodisch wiederkehrenden, mit der Frequenz der Rotoreinheit korrelierenden Abweichung der Abstandswerte zu rechnen. Eine Verlagerung der Drehachse kann z.B. mit einem gegenüber einem zuvor gemessenen Soll- bzw. Referenzwert abweichenden Abstandswert verbunden sein, und zwar nicht nur, wenn die Rotoreinheit entlang der Drehachse verlagert wird, sondern auch, wenn die Drehachse der Rotoreinheit leicht verkippt wird.

Zur Auswertung ist es generell von Vorteil, die Differenz der aktuellen Messwerte und der jeweiligen Referenzwerte zu bestimmen, um die Abweichungen erkennen und auswerten zu können. Da eine zeitliche Abfolge von Abstandswerten zur sich drehenden Rotoreinheit aufgenommen werden, kann über eine Fourier-Transformation das Messsignal in ein kontinuierliches Spektrum zerlegt werden. Im Ergebnis werden die geometrischen Abweichungen, also abweichende Abstandswerte, zugeordnet nach der Häufigkeit, mit der sie erscheinen, dargestellt. Wenn größere, vor allem singulär auftretende geometrische Abweichungen im Spektrum zu sehen sind, kann in der Regel von einem Planlauffehler ausgegangen werden.

Um die Auswertung zu vereinfachen und effizienter zu gestalten, muss die Fourier-Transformierte nicht exakt berechnet werden, sondern es können auch z.B. Algorithmen wie eine schnelle (FFT) bzw. diskrete Fourier-Transformation (FFT) verwendet werden. Dadurch kann die Auswertung auch einfacher in eine Elektronikeinheit der Prüfungsvorrichtung implementiert werden.

Bei der Analyse der Abstandswerte kann die Differenzbildung der Abstandswerte vor der Fourier-Transformation erfolgen oder, umgekehrt, die Abfolgen werden zunächst separat Fouriertransformiert und anschließend wird die Differenz der Ergebnisse gebildet. Stattdessen kann auch eine Mittelwertbildung der Zeitsignale erfolgen, d.h. die Messwerte einer aufgenommenen Abfolge werden jeweils gemittelt, sodass z.B. eine Abfolge von positionsbezogenen Mittelwerten vorliegt. Die jeweiligen Mittelwerte der einzelnen Abfolgen werden dann voneinander subtrahiert, um die Abweichung zu erfassen.

Wird ein Planlauffehler von der Prüfungsvorrichtung erkannt, sind verschiedene Maßnahmen denkbar. Ist der Fehler gravierend und der Lauf der Rotoreinheit stark beeinflusst, so kann die Prüfungsvorrichtung die Daten oder entsprechende Befehle an die Kontrolleinheit der Werkzeugmaschine (z.B. die Maschinensteuerung) senden, um gegebenenfalls sogar die Maschine abzuschalten. Denkbar ist auch, dass bei geringeren Abweichungen durch Positioniervorrichtungen eingegriffen wird, um das Werkzeug entsprechend auszurichten. Zeigen sich lokale Maxima in der Auswertungsabfolge, so können Planlauffehler vorliegen. Da jede Messung grundsätzlich mit statistischen und systematischen Fehlern behaftet ist, ist grundsätzlich aber damit zu rechnen, dass auch im Normalbetrieb ohne Planlauffehler Abweichungen zur Referenzmessung auftreten. Daher ist es vorteilhaft, einen Schwellwert zu bestimmen, ab dem ein Planlauffehler angenommen werden muss. Dieser Schwellwert kann, falls nötig, auch noch einmal korrigiert werden. Diese Auswertung kann Computerimplementiert durchgeführt werden. In der Fourier-Transformierten kann an einem speziellen Frequenzwert untersucht werden, ob eine Überschreitung des Schwellwertes vorliegt, z.B. bei der Rotationsfrequenz der Rotoreinheit. Genauso sind z.B. die berechneten Mittelwerte nach einer weiteren Auswertungsmethode positionsbezogen, sodass auch hier an einer bestimmten Stelle verglichen werden kann, ob der Schwellwert überschritten ist oder nicht. Deformationen an einzelnen Stellen werden in der Regel Abweichungen aufzeigen, die periodisch mit der Rotationsfrequenz der Rotoreinheit auftreten.

Die Auswertungsabfolge, die auf lokale Maxima hin untersucht wird, kann zum Beispiel folgende Berechnungen aufweisen:
- eine Differenzbildung zwischen der ersten und zweiten zeitlichen Abfolge (und anschließend eine Fourier-Transformation, insbesondere eine diskrete Fourier-Transformation, vorzugsweise eine FFT und/oder eine DFT, der zuvor gebildeten Differenz der ersten und zweiten zeitlichen und/oder positionsbezogenen Abfolge und/oder eine Fourier-Transformation, insbesondere eine diskrete Fourier-Transformation, vorzugsweise eine FFT und/oder DFFT, jeweils der ersten und zweiten zeitlichen und/oder positionsbezogenen Abfolge und anschließend eine Differenzbildung zwischen den jeweils Fourier-transformierten ersten und zweiten zeitlichen Abfolgen und/oder
- Bildung des Mittelwerts der ersten und/oder zweiten zeitlichen und/oder positionsbezogenen Abfolge mit anschließender Differenzbildung zwischen den Mittelwerten.

### Ausführungsbeispiele:

Ausführungsbeispiele der Erfindung sind in den Zeichnungen dargestellt und werden nachstehend unter Angabe weiterer Einzelheiten und Vorteile näher erläutert.

Im Einzelnen zeigen:
- Fig. 1:: eine schematische Darstellung einer Werkzeugmaschineneinheit gem. der Erfindung,
- Fig. 2:: eine schematische Darstellung eines Auszugs des Prüfungsverfahrens gem. der Erfindung zur Prüfung des Spannzustands,
- Fig. 3:: eine Darstellung eines Verformungsbildes als Auswertungsergebnis, sowie
- Fig. 4:: ein Diagramm zur Darstellung des Ablaufs im Serienbetrieb.

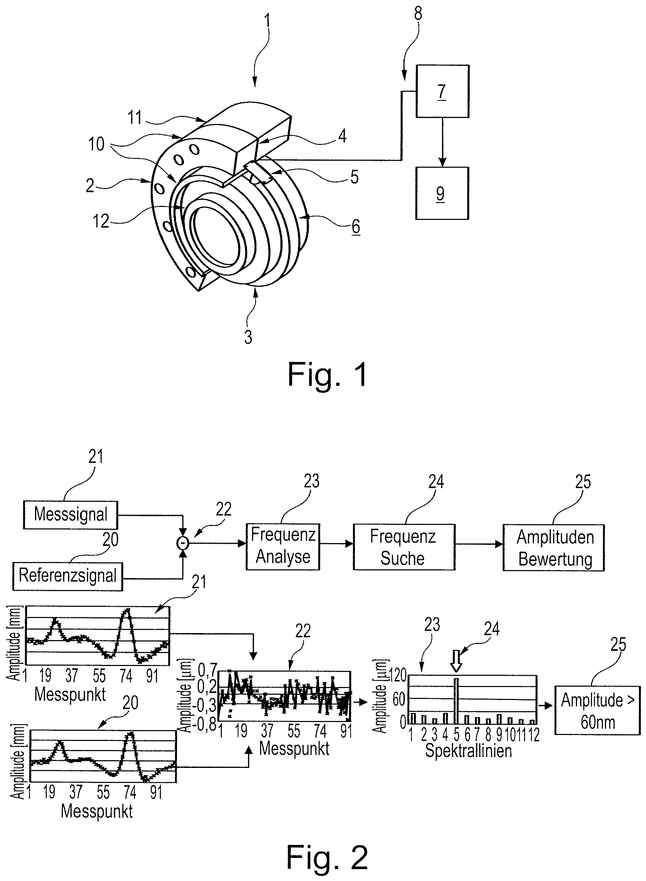

Figur 1 zeigt eine schematische Darstellung einer Werkzeugmaschineneinheit 1 mit einer Statoreinheit 2 und einer Rotoreinheit 3, wobei in Figur 1 vor allem der Spindelkopf als Teil der Rotoreinheit 3 zu sehen ist. Die Statoreinheit 2 weist einen Ring 4 auf, an dem ein Sensorkopf in Form eines Axialsensors 5 angebracht ist. Die Rotoreinheit 3 umfasst einen Messring 6 aus Aluminium. Der Axialsensor 5 ist so angeordnet, dass er den Abstand zu einer stirnseitigen Fläche der Rotoreinheit 3 misst. Diese Fläche, zu welcher der Abstand bestimmt wird, befindet sich auf dem Messring 6. Der Axialsensor 5 ist als Wirbelstromsensor ausgebildet, um trotz etwaiger Verschmutzungen möglichst genaue Messungen erhalten zu können.

Der Sensorkopf / Axialsensor 5 ist mit einer Elektronikeinheit 7 verbunden; beide zusammen bilden die Prüfungsvorrichtung 8, die wiederum mit der Maschinensteuerung 9 verbunden ist, sodass gegebenenfalls bei zu starken Planlauffehlern in die Steuerung eingegriffen werden kann.

Nur ein Sensorkopf 5 ist vorgesehen. Denkbar ist es, zusätzlich einen Triggersensor, z.B. zur Erkennung einer optischen Referenzmarkierung am Messring 6 einzusetzen, wobei ein solcher Triggersensor beispielsweise auch am Sensorring 4 angebracht werden kann. Mit einem derartigen Triggersensor wird nur der Initialpunkt für die Messungen getriggert, damit bei der Auswertung einfacher die Phasenbeziehungen der Messwerte zueinander festgesetzt werden können. Ein Triggersensor ist nicht zwingend notwendig und auch in Figur 1 nicht weiter dargestellt.

Die Statoreinheit 2 umfasst eine Abdeckung 10 für den Sensorring 4 und des Weiteren einen Lagerdeckel 11. An der Rotoreinheit 3 ist eine Werkzeug-Aufnahmevorrichtung 12 angebracht (in Fig. 1 ist der Konusring dargestellt).

Mit den zur Verfügung stehenden Werkzeugen, die in die Werkzeugaufnahme eingespannt werden, wird jeweils zunächst mit der neuen Werkzeugmaschineneinheit 1 eine Abfolge 20 von Referenzmesswerten aufgenommen. Im Betrieb wird dann später bei jedem Werkzeug eine neue Abfolge 21 von Abstandswerten bestimmt, in der Regel bei konstanter Drehzahl der Rotoreinheit 3. In Figur 2 wird die Differenz 22 gebildet. Anschließend erfolgt eine Frequenzanalyse 23 des Signals in Form einer Fourier-Transformation. Es wird überprüft (Verfahrensschritt 24), ob bei einer bestimmten Frequenz ein Maximum vorliegt, z.B. bei der Rotationsfrequenz der Rotoreinheit 3 bzw. bei welchen Frequenzen derartige Maxima in Erscheinung treten. Überschreiten diese einen Schwellwert, liegt z.B. eine Deformation infolge eines im Werkzeugfutter befindlichen Spans (Amplitudenbewertung: Verfahrensschritt 25).

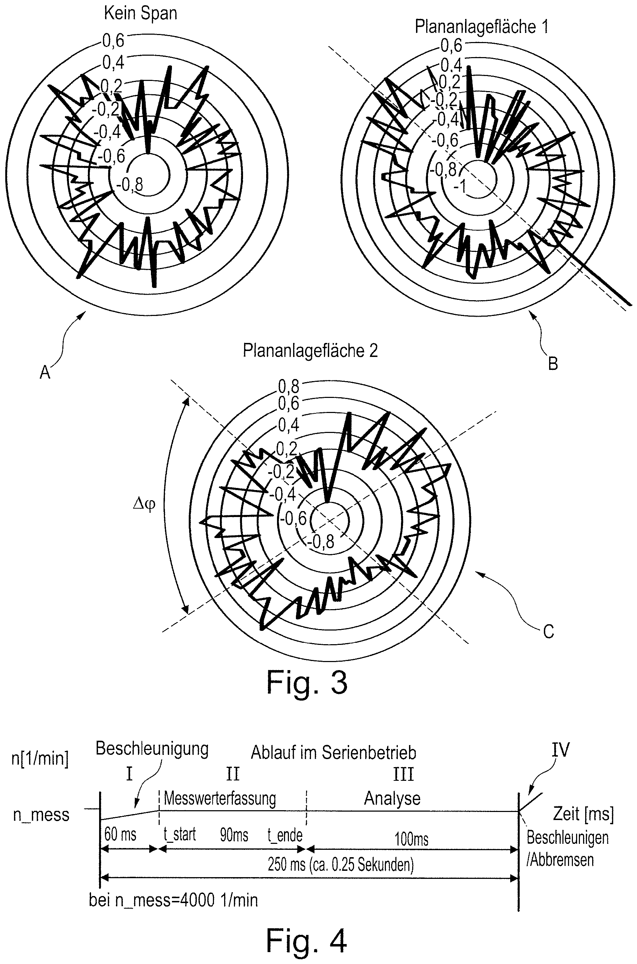

In Figur 3 sind typische Verformungsbilder für dargestellt, wobei in der Darstellung A kein Span vorliegt und die Amplitudenverteilung wesentlich gleichmäßiger im gesamten Winkelbereich ist, während in der Darstellung B ein Span in der Werkzeugaufnahme eingeklemmt ist und für eine deutliche Verzerrung (zwischen 10-11 Uhr sowie 4-5 Uhr) mit höheren Amplituden bewirkt. Entsprechend kann auch der Schwellwert bestimmt werden. In der Darstellung C liegt der Span an einer anderen Winkelposition, sodass sich die Darstellung C gegenüber der Darstellung B hauptsächlich hinsichtlich der Phase um Δϕ unterscheidet.

Im Serienbetrieb kann die Spannzustand-Prüfung in sehr kurzen Zeitabschnitten der Anlaufphase durchgeführt werden. In Figur 4 erfolgt in den ersten 60 ms eine Beschleunigung der Rotoreinheit 3 (Phase I), dann wird in Phase II eine Messwerterfassung durchgeführt (Dauer: ca. 90 ms, bei konstanter Drehzahl der Rotoreinheit 3). Für die sich anschließende Analyse in Phase III werden hier ca. 100 ms angesetzt. Kann kein Planlauffehler festgestellt werden, kann in Phase IV eine weitere Beschleunigung erfolgen. Andernfalls muss aus Sicherheitsgründen gegebenenfalls in Phase IV abgebremst werden.

### Bezugszeichenliste:

- 1: Werkzeugmaschineneinheit
- 2: Statoreinheit
- 3: Rotoreinheit
- 4: Sensorring
- 5: Axialsensor
- 6: Messring
- 7: Elektronikeinheit
- 8: Prüfungsvorrichtung
- 9: Maschinensteuerung
- 10: Abdeckung
- 11: Lagerdeckel
- 12: Konusring / Werkzeug-Aufnahmevorrichtung
- 20: Referenzsignal
- 21: Messsignal
- 22: Differenzoperator
- 23: Frequenz-Analyse
- 24: Frequenzsuche
- 25: Amplitudenbewertung
- A: Verformungsbild (ohne Span)
- B, C: Verformungsbilder (mit Span, an unterschiedlicher Position)
- I: Beschleunigungsphase
- II: Messwerterfassung
- III: Analyse
- IV: Beschleunigen / Abbremsen
- Δϕ: Phasenunterschied

## Patentansprüche

1. Motorisch angetriebene Werkzeugmaschineneinheit (1) mit einer Statoreinheit (2) und einer um eine Drehachse drehbaren Rotoreinheit (3), wobei die Rotoreinheit (3) einen Spindelkopf mit einer Werkzeugaufnahmeeinheit (12) mit einer in Längsrichtung der Drehachse verstellbaren und mit einer Spannkraft beaufschlagbaren Werkzeug-Spannvorrichtung zum Verspannen und Fixieren eines lösbar fixierbaren Werkzeugs umfasst, **dadurch gekennzeichnet, dass** eine Prüfungsvorrichtung zur Prüfung des Spannzustands des Werkzeugs vorgesehen ist, welche genau einen Sensorkopf zur sensorischen Erfassung aufweist, wobei der Sensorkopf an der Statoreinheit (2) an einer festen Position so angeordnet ist, dass er den Abstand zu einem stirnseitigen Teil des relativ zum Sensorkopf (5) rotierenden Spindelkopfes misst, wobei die Prüfungsvorrichtung (8) dazu ausgebildet ist, eine zeitliche und/oder positionsbezogene Abfolge von wenigstens zwei Abstandswerten und/oder wenigstens zwei aufeinanderfolgenden Serien (20, 21) von jeweils wenigstens zwei Abstandswerten aufzunehmen, um insbesondere allein aus der zeitlichen und / oder positionsbezogenen Abfolge von Abstandswerten einen Planlauffehler zu bestimmen.

2. Werkzeugmaschineneinheit (1) nach Anspruch 1, **dadurch gekennzeichnet, dass** die Rotoreinheit (3) einen Messring (6) aufweist und der Sensorkopf (5) so angeordnet ist, dass er den Abstand zum stirnseitigen Teil des Messrings bestimmt, wobei insbesondere der Messring (6) als vom Spindelkopf separates Teil ausgebildet ist, wobei der Messring (6) auf den Spindelkopf aufgesetzt ist, oder wobei insbesondere der Messring (6) zusammen mit dem Spindelkopf einteilig ausgebildet ist.

3. Werkzeugmaschineneinheit (1) nach Anspruch 2, **dadurch gekennzeichnet, dass** der Messring (6) eine Referenzmarkierung aufweist, um bei der Aufnahme der Abfolge von Abstandswerten einen Initialpunkt für die Auswertung, insbesondere für die Differenzbildung und/oder die Fourier-Transformation, zu setzen, wobei die Referenzmarkierung insbesondere als Ausnehmung, zum Beispiel als Nut und/oder Bohrung, oder als vom restlichen Messring abstehender Teil oder als optische Markierung ausgebildet ist.

4. Werkzeugmaschineneinheit (1) nach Anspruch 3, **dadurch gekennzeichnet, dass** ein Triggerungssensor vorgesehen ist, um die Referenzmarkierung zu erfassen und den Intialpunkt zu setzen, wobei der Triggerungssensor den Intialpunkt, insbesondere den Zeitpunkt der Erfassung der Referenzmarkierung an die Prüfungsvorrichtung weiterleitet.

5. Werkzeugmaschineneinheit (1) nach einem der Ansprüche 2 - 4, **dadurch gekennzeichnet, dass** der Sensorkopf (5) als Wirbelstromsensor und/oder als kapazitiver Sensor ausgebildet ist, wobei der Messring (6) aus einem elektrischen Leiter besteht, insbesondere aus einem nicht magnetischen und/oder nicht ferromagnetischen und/oder einem paramagnetischen Material, vorzugsweise aus Aluminium.

6. Werkzeugmaschineneinheit (1) nach einem der vorgenannten Ansprüche, **dadurch gekennzeichnet, dass** die Prüfungsvorrichtung (8) dazu ausgebildet ist, eine Verlagerung der Rotoreinheit (3) und/oder der Drehachse zu bestimmen.

7. Verfahren zur Prüfung des Spannzustands eines in einer Werkzeugaufnahmeeinheit (12) einer Rotoreinheit (3) einer motorisch angetriebenen Werkzeugmaschineneinheit (1) eingespannten Werkzeugs, wobei das Werkzeug lösbar fixiert und mittels einer mit Spannkraft beaufschlagbaren Werkzeug-Spannvorrichtung der Werkzeugaufnahmeeinheit (12) verspannt wird, wobei die Werkzeug-Spannvorrichtung beim Verspannen des Werkzeugs in Längsrichtung der Drehachse verstellt wird, wobei die Werkzeugaufnahmeeinheit im Spindelkopf der Rotoreinheit (3) angeordnet ist, wobei die Werkzeugmaschineneinheit (1) eine Statoreinheit (2) aufweist, gegenüber der die Rotoreinheit (3) um eine Drehachse drehbar gelagert ist, wobei das Verfahren folgende Verfahrensschritte umfasst:
- Bereitstellen eines Sensorkopfes (5) zur Bestimmung eines Abstandes
- Anordnung des Sensorkopfes (5) an einer festen Position an der Statoreinheit (2), und
durch folgende Verfahrensschritte gekennzeichnet ist:
- Messung (II) des Abstands des Sensorkopfes (5) von einem stirnseitigen Teil der Rotoreinheit (3)
- Aufnahme einer zeitlichen und/oder positionsbezogenen Abfolge (20, 21) der mit dem Sensorkopf (5) gemessenen Abstandswerte
- Bestimmung einen Planlauffehlers (III, 25) ausschließlich unter Berücksichtigung der zeitlichen Abfolge der gemessenen Abstandswerte zum stirnseitigen Teil des relativ zum Sensorkopf rotierenden Spindelkopfes.

8. Verfahren zur Prüfung nach Anspruch 7, **dadurch gekennzeichnet, dass** eine erste zeitliche und/oder positionsbezogene Abfolge von Abstandswerten, die als Referenzmessung (20) verwendet wird, bei ideal eingespanntem Werkzeug, insbesondere vor dem ersten Bearbeitungsvorgang durch die Werkzeugmaschineneinheit und/oder nach einem Reinigungsvorgang, vorzugsweise individuell für jedes verwendete Werkzeug, aufgenommen wird, während sich die Rotoreinheit (3) gegenüber der Statoreinheit (2) dreht.

9. Verfahren zur Prüfung nach einem der Ansprüche 7 - 8, **dadurch gekennzeichnet, dass** eine zweite zeitliche und/oder positionsbezogene Abfolge (21) von Abstandswerten bei eingespanntem Werkzeug in einer Betriebssituation, insbesondere in einer im Vergleich zur Referenzmessung späteren Betriebssituation, aufgenommen wird, während sich die Rotoreinheit (3) gegenüber der Statoreinheit (2) dreht, die als Vergleichsmessung zur Referenzmessung verwendet wird.

10. Verfahren zur Prüfung nach Anspruch 9, **dadurch gekennzeichnet, dass** der ersten und/oder zweiten Abfolge von Abstandswerten ein Initialpunkt für die Auswertung zugeordnet wird, um insbesondere bei der Differenzbildung (22) und/oder der Fourier-Transformation (23) die Abstandwerte von erster und zweiter Abfolge (20, 21) einander zuordnen zu können.

11. Verfahren zur Prüfung nach einem der Ansprüche 9 - 10, **dadurch gekennzeichnet, dass** mittels wenigstens einer der folgenden Berechnungen eine Auswertungsabfolge von Werten bestimmt wird:
- eine Differenzbildung (22) zwischen der ersten und zweiten zeitlichen Abfolge (20, 21) und anschließend eine Fourier-Transformation (23), insbesondere eine diskrete Fourier-Transformation, vorzugsweise eine FFT und/oder eine DFT, der zuvor gebildeten Differenz der ersten und zweiten zeitlichen und/oder positionsbezogenen Abfolge und/oder
eine Fourier-Transformation (23), insbesondere eine diskrete Fourier-Transformation, vorzugsweise eine FFT und/oder DFFT, jeweils der ersten und zweiten zeitlichen und/oder positionsbezogenen Abfolge und anschließend eine Differenzbildung (22) zwischen den jeweils Fourier-transformierten ersten und zweiten zeitlichen Abfolgen und/oder
- Bildung des Mittelwerts der ersten und/oder zweiten zeitlichen und/oder positionsbezogenen Abfolge mit anschließender Differenzbildung zwischen den Mittelwerten.

12. Verfahren zur Prüfung nach Anspruch 11, **dadurch gekennzeichnet, dass** die Auswertungsabfolge nach einem Maximum oder wenigstens zwei Maxima durchsucht wird (25), die einen vorgegebenen Schwellwert überschreiten und im Fall des Überschreitens des Schwellwertes ein Planlauffehler angenommen wird.

13. Verfahren zur Prüfung nach einem der Ansprüche 11 - 12, **dadurch gekennzeichnet, dass** in der Auswertungsfolge, insbesondere in der Fourier-Transformierten bei einem der Umdrehungszahl pro Zeiteinheit der Rotoreinheit entsprechenden Frequenzwert (24) der Differenzwert der Abstände mit einem Schwellwert verglichen wird und im Fall des Überschreitens des Schwellwertes (25) ein Planlauffehler angenommen wird.

14. Verfahren zur Prüfung nach einem der Ansprüche 9 - 13, **dadurch gekennzeichnet, dass** aus der Differenz (22) der ersten und zweiten zeitlichen und/oder positionsbezogenen Abfolge (20, 21) eine Verlagerung der Rotoreinheit und/oder der Drehachse bestimmt wird.

15. Verfahren zur Prüfung nach einem der vorgenannten Ansprüche 7-14, **dadurch gekennzeichnet, dass** als Werkzeugmaschineneinheit (1) eine solche nach einem der Ansprüche 1 - 6 verwendet wird.

## Claims

1. A motor-driven machine tool unit (1) having a stator unit (2) and a rotor unit (3) rotatable about an axis of rotation, wherein the rotor unit (3) has a spindle head with a tool receiving unit (12) with a tool tensioning device that can be adjusted in the longitudinal direction of the axis of rotation and can be acted upon with a tensioning force for tensioning and fixing a releasably fixable tool, **characterised in that** a testing device for testing the tensioning state of the tool is provided, which has exactly one sensor head for sensor detection, wherein the sensor head is arranged on the stator unit (2) at a fixed position in such a way that it measures the distance to an end part of the spindle head rotating relative to the sensor head (5), wherein the testing device (8) is designed to produce a chronological and/or position-related sequence of at least two distance values and/or at least two successive series (20, 21) of at least two distance values in each case, in order to determine a runout error in particular solely from the chronological and/or position-related sequence of distance values.

2. The machine tool unit (1) according to Claim 1, **characterised in that** the rotor unit (3) has a measuring ring (6) and the sensor head (5) is arranged in such a way that it determines the distance from the end part of the measuring ring, wherein the measuring ring (6) is designed in particular as a separate part from the spindle head, wherein the measuring ring (6) is placed on the spindle head, or in particular the measuring ring (6) is formed in one piece with the spindle head.

3. The machine tool unit (1) according to Claim 2, **characterised in that** the measuring ring (6) has a reference marking in order to set an initial point for the evaluation, in particular for the difference formation and/or the Fourier transformation, when recording the sequence of distance values, wherein the reference marking is designed in particular as a recess, for example as a groove and/or a bore, or as a part protruding from the rest of the measuring ring or as an optical marking.

4. The machine tool unit (1) according to Claim 3, **characterised in that** a trigger sensor is provided in order to detect the reference marking and to set the initial point, wherein the trigger sensor forwards the initial point, in particular the time of detection of the reference marking, to the testing device.

5. The machine tool unit (1) according to any one of Claims 2 to 4, **characterised in that** the sensor head (5) is designed as an eddy current sensor and/or as a capacitive sensor, wherein the measuring ring (6) consists of an electrical conductor, in particular a nonmagnetic and/or non-ferromagnetic and/or a paramagnetic material, preferably made of aluminium.

6. The machine tool unit (1) according to any one of the preceding claims, **characterised in that** the testing device (8) is designed to determine a displacement of the rotor unit (3) and/or the axis of rotation.

7. A method for testing the tensioning state of a tool tensioned in a tool receiving unit (12) of a rotor unit (3) of a motor-driven machine tool unit (1), wherein the tool is detachably fixed and tensioned by means of a tool tensioning device of the tool receiving unit (12) which can be loaded with tensioning force, wherein the tool tensioning device is adjusted in the longitudinal direction of the axis of rotation when the tool is tensioned, wherein the tool receiving unit is arranged in the spindle head of the rotor unit (3), wherein the machine tool unit (1) has a stator unit (2), against which the rotor unit (3) is rotatably mounted about an axis of rotation, wherein the method comprises the following method steps:
- Provision of a sensor head (5) for determining a distance
- Arrangement of the sensor head (5) at a fixed position on the stator unit (2), and
is **characterised by** the following method steps:
- Measurement (II) of the distance of the sensor head (5) from an end part of the rotor unit (3),
- Recording of a chronological and/or position-related sequence (20, 21) of the distance values measured with the sensor head (5),
- Determination of an axial runout error (III, 25) only taking into account the chronological sequence of the measured distance values to the front part of the spindle head rotating relative to the sensor head.

8. The testing method according to Claim 7, **characterised in that** a first chronological and/or position-related sequence of distance values, which is used as a reference measurement (20), is preferably individually recorded for each used tool, with an ideally tensioned tool, in particular before the first machining process by the machine tool unit and/or after a cleaning process, while the rotor unit (3) rotates relative to the stator unit (2).

9. The testing method according to any one of Claims 7 to 8, **characterised in that** a second chronological and/or position-related sequence (21) of distance values is recorded, with a tool tensioned in an operating situation, in particular in a subsequent operating situation compared to the reference measurement, while the rotor unit (3) rotates relative to the stator unit (2), which is used as a comparison measurement for the reference measurement.

10. The testing method according to Claim 9, **characterised in that** the first and/or second sequence of distance values is assigned an initial point for the evaluation, in particular in order to be able to assign the distance values of the first and second sequence (20, 21) to one another, in particular in the case of difference formation (22) and/or the Fourier transformation (23).

11. The testing method according to any one of Claims 9 to 10, **characterised in that** an evaluation sequence of values is determined by means of at least one of the following calculations:
- A difference formation (22) between the first and second chronological sequence (20, 21) and then a Fourier transformation (23), in particular a discrete Fourier transformation, preferably an FFT and/or a DFT, of the previously formed difference of the first and second chronological and/or position-related sequence, and/or
A Fourier transformation (23), in particular a discrete Fourier transformation, preferably an FFT and/or DFFT, in each case of the first and second chronological and/or position-related sequence and subsequently a difference formation (22) between the respectively Fourier-transformed first and second chronological sequences, and/or
- Formation of the mean value of the first and/or second chronological and/or position-related sequence with subsequent difference formation between the mean values.

12. The testing method according to Claim 11, **characterised in that** the evaluation sequence is searched (25) for a maximum or at least two maxima which exceed a predetermined threshold value and, in the event of the threshold value being exceeded, a runout error is assumed.

13. The testing method according to any one of Claims 11 to 12, **characterised in that**, in the evaluation sequence, in particular in the Fourier transformation, at a frequency value (24) corresponding to the number of revolutions per unit time of the rotor unit, the difference value of the distances is compared with a threshold value and, in the case that the threshold value (25) is exceeded, a runout error is assumed.

14. The testing method according to any one of Claims 9 to 13, **characterised in that** a displacement of the rotor unit and/or the axis of rotation is determined from the difference (22) of the first and second chronological and/or position-related sequence (20, 21).

15. The testing method according to any one of the preceding Claims 7 to 14, **characterised in that** the machine tool unit (1) used is one according to any one of Claims 1 to 6.

## Revendications

1. Unité de machine-outil (1) entraînée par moteur comportant une unité de stator (2) et une unité de rotor (3) pouvant tourner autour d'un axe de rotation, dans laquelle l'unité de rotor (3) comporte une tête de broche comportant une unité de support d'outil (12) comportant un dispositif de serrage d'outil, lequel peut être réglé dans la direction longitudinale de l'axe de rotation et lequel peut être actionné à l'aide d'une force de serrage pour serrer et fixer un outil pouvant être fixé de manière amovible, **caractérisée en ce qu'**un dispositif de vérification est prévu pour vérifier l'état de serrage de l'outil, lequel comporte exactement une tête de capteur destinée à la détection par le capteur, dans laquelle la tête de capteur est agencée sur l'unité de stator (2) à une position fixe de telle sorte que ladite tête de capteur mesure la distance à une partie d'extrémité avant de la tête de broche tournant par rapport à la tête de capteur (5), dans laquelle le dispositif de vérification (8) est conçu pour enregistrer une séquence temporelle et/ou relative à la position d'au moins deux valeurs de distance et/ou d'au moins deux séries (20, 21) successives d'au moins deux valeurs de distance respectivement, pour, en particulier, déterminer un voile uniquement à partir de la séquence temporelle et/ou relative à la position des valeurs de distance.

2. Unité de machine-outil (1) selon la revendication 1, **caractérisée en ce que** l'unité de rotor (3) comporte une bague de mesure (6) et la tête de capteur (5) est agencée de telle sorte que ladite tête de capteur détermine la distance par rapport à la partie d'extrémité avant de la bague de mesure, dans laquelle, en particulier, la bague de mesure (6) est conçue sous la forme d'une pièce distincte de la tête de broche, dans laquelle la bague de mesure (6) est placée sur la tête de broche ou dans laquelle, en particulier, la bague de mesure (6) est conçue d'une seule pièce conjointement avec la tête de broche.

3. Unité de machine-outil (1) selon la revendication 2, **caractérisée en ce que** la bague de mesure (6) comporte un repère de référence pour fixer, lors de l'enregistrement de la séquence de valeurs de distance, un point initial pour l'évaluation, en particulier pour la formation de différence et/ou la transformation de Fourier, dans laquelle le marquage de référence est conçu, en particulier, sous la forme d'un évidement, par exemple sous la forme d'une rainure et/ou d'un alésage ou sous la forme d'une partie faisant saillie du reste de la bague de mesure ou sous la forme d'un marquage optique.

4. Unité de machine-outil (1) selon la revendication 3, **caractérisée en ce qu'**un capteur de déclenchement est prévu pour détecter le marquage de référence et pour régler le point initial, dans laquelle le capteur de déclenchement transmet le point initial, en particulier le moment de la détection du marquage de référence, au dispositif de vérification.

5. Unité de machine-outil (1) selon l'une quelconque des revendications 2 à 4, **caractérisée en ce que** la tête de capteur (5) est conçue sous la forme d'un capteur à courants de Foucault et/ou sous la forme d'un capteur capacitif, dans laquelle la bague de mesure (6) est constituée d'un conducteur électrique, en particulier en un matériau non magnétique et/ou non ferromagnétique et/ou paramagnétique, de préférence d'aluminium.

6. Unité de machine-outil (1) selon l'une quelconque des revendications précédentes, **caractérisée en ce que** le dispositif de vérification (8) est conçu pour déterminer un déplacement de l'unité de rotor (3) et/ou de l'axe de rotation.

7. Procédé de vérification de l'état de serrage d'un outil serré dans une unité de logement d'outil (12) d'une unité de rotor (3) d'une unité de machine-outil (1) entraînée par moteur, dans lequel l'outil est fixé et serré de manière amovible au moyen d'un dispositif de serrage d'outil de l'unité de logement d'outil (12), lequel peut être chargé d'une force de serrage, dans lequel le dispositif de serrage d'outil, lors du serrage de l'outil, est réglé dans la direction longitudinale de l'axe de rotation, dans lequel l'unité de logement d'outil est disposée dans la tête de broche de l'unité de rotor (3), dans lequel l'unité de machine-outil (1) comporte une unité de stator (2) contre laquelle l'unité de rotor (3) est logée de manière à pouvoir tourner autour d'un axe de rotation, dans lequel ledit procédé comprenant les étapes suivantes :
- la fourniture d'une tête de capteur (5) pour déterminer une distance
- l'agencement de la tête de capteur (5) à une position fixe sur l'unité de stator (2) et **caractérisé par** les étapes suivantes :
- la mesure (II) de la distance de la tête de capteur (5) à une partie d'extrémité avant de l'unité de rotor (3),
- l'enregistrement d'une séquence temporelle et/ou relative à la position (20, 21) des valeurs de distance mesurées à l'aide de la tête de capteur (5),
- la détermination d'un voile (III, 25) en prenant uniquement en compte la séquence temporelle des valeurs de distance mesurées à la partie d'extrémité avant de la tête de broche tournant par rapport à la tête de capteur.

8. Procédé de vérification selon la revendication 7, **caractérisé en ce qu'**une première séquence temporelle et/ou relative à la position de valeurs de distance, laquelle est utilisée en tant que mesure de référence (20), lorsque l'outil est idéalement serré, en particulier avant le premier processus d'usinage par l'unité de machine-outil et/ou après un processus de nettoyage, de préférence individuellement pour chaque outil utilisé, est enregistrée lorsque l'unité de rotor (3) tourne par rapport à l'unité de stator (2).

9. Procédé de vérification selon l'une quelconque des revendications 7 à 8, **caractérisé en ce qu'**une seconde séquence temporelle et/ou relative à la position (21) de valeurs de distance, lorsque l'outil est serré, dans une situation de fonctionnement, en particulier dans une situation de fonctionnement ultérieure par comparaison avec la mesure de référence, est enregistrée lorsque l'unité de rotor (3) tourne par rapport à l'unité de stator (2), laquelle est utilisée en tant que mesure de comparaison par rapport à la mesure de référence.

10. Procédé de vérification selon la revendication 9, **caractérisé en ce que** la première et/ou la seconde séquences de valeurs de distance sont attribuées à un point initial pour l'évaluation, en particulier lors de la formation de différence (22) et/ou de la transformation de Fourier (23), pour pouvoir attribuer mutuellement les valeurs de distance des première et seconde séquences (20, 21).

11. Procédé de vérification selon l'une quelconque des revendications 9 à 10, **caractérisé en ce qu'**une séquence d'évaluation de valeurs est déterminée au moyen d'au moins un des calculs suivants :
- une formation de différence (22) entre la première et la seconde séquence (20, 21) temporelle, puis, une transformation de Fourier (23), en particulier une transformation de Fourier discrète, de préférence une FFT et/ou une DFT, de la différence précédemment formée des première et seconde séquences temporelles et/ou relatives à la position et/ou
une transformation de Fourier (23), en particulier une transformation de Fourier discrète, de préférence une FFT et/ou DFFT, respectivement des première et seconde séquences temporelles et/ou relatives à la position et enfin, une formation de différence (22) entre les première et seconde transformations de Fourier respectives des séquences temporelles et/ou
- la formation de la valeur moyenne de la première et/ou de la seconde séquence temporelle et/ou relative à la position avec la formation ultérieure de la différence entre les valeurs moyennes.

12. Procédé de vérification selon la revendication 11, **caractérisé en ce que** la séquence d'évaluation est recherchée (25) pour un maximum ou au moins deux maxima, lesquels dépassent une valeur seuil prédéterminée et lors du dépassement de la valeur seuil, un voile est supposé.

13. Procédé de vérification selon l'une quelconque des revendications 11 à 12, **caractérisé en ce que** dans la séquence d'évaluation, en particulier dans la transformée de Fourier à une valeur de fréquence (24) correspondant au nombre de tours par unité temporelle de l'unité de rotor, la valeur de différence des distances est comparée à une valeur seuil et lorsque la valeur seuil (25) est dépassée, un voile est supposé.

14. Procédé de vérification selon l'une quelconque des revendications 9 à 13, **caractérisé en ce que**, à partir de la différence (22) des première et seconde séquences temporelles et/ou relatives à la position (20, 21), un déplacement de l'unité de rotor et/ou de l'axe de rotation est déterminé.

15. Procédé de vérification selon l'une quelconque des revendications 7 à 14 précédentes, **caractérisé en ce que**, en tant qu'unité de machine-outil (1), une unité de machine-outil selon l'une quelconque des revendications 1 à 6 est utilisée.
